# EUROPEAN PATENT SPECIFICATION

(11) **EP 1 864 896 B1**
(45) Date of publication and mention of the grant of the patent: **19.08.2009**
(21) Application number: 07380164.9
(22) Date of filing: 06.06.2007
(51) Int. Cl.: B62K 3/00, A45C 5/14, A45F 4/02

(54) **Convertible backpack**
Umwandelbarer Rucksack
Sac à dos convertible

(30) Priority: 09.06.2006 ES 200601565
(43) Date of publication of application: 12.12.2007
(73) Proprietor: Garcia Domingo, José Gregorio, 39010 Santander (ES)
(72) Inventor: Garcia Domingo, José Gregorio, 39010 Santander (ES)
(74) Representative: Eisenführ, Speiser & Partner

(56) References cited:
- WO-A-01/19213
- WO-A-02/45539
- FR-A- 2 818 100
- FR-A1- 2 849 751
- US-B1- 6 460 866

## Description

### SUBJECT OF THE INVENTION

The subject of this invention is a convertible backpack, that provides the function for which it was designed, various advantages that will be described later, apart from others inherent to its organisation and constitution.

### BACKGROUND OF THE INVENTION

At present and in reference to the state of the technique, it should be mentioned that there exists on the market multiple and diverse types of backpacks, which consist of hollow bodies of a flexible material and provided with at least one opening in order to store objects in.the inside of the backpack, which is furnished with straps that facilitate its transport by securing it to the user's back.

FR 2 849 751 discloses a suitcase or backpack with an integrated three-wheel scooter having a footboard assembly and a rear wheel that can be folded between a scooter position and a stowed-away position. In its stowed-away position, the footboard and the rear wheel are placed in an extra compartment of the backpack or suitcase.

### DESCRIPTION OF THE INVENTION

The convertible backpack, subject of this invention, comprises a structure that permits its conversion into a small cart or into a scooter.

This structure is lightweight and is comprised basically by a long base, from the front of which emerge on its ends a pair of telescopic tubes supplied with their corresponding fasteners to set the height, joined in the upper part to a crosspiece, whose ends are finished by their respective handles.

The area in front of the base presents, transversely and on the underside, a rotation axis with its wheels on the end, and the upper surface is used to hold the backpack, which is affixed with shoulder straps directed towards the front, while the telescopic tubes are fastened by strips.

The remainder of the base is appreciably elongated and is articulated to the front part, permitting it to fold against the backpack and subsequently be fastened with the backpack's bands, which is then perfectly immobilised, while on the other hand, with respect to this elongated area, there are some pins that immobilise the articulation, transversely, under the lower part of the opposite end of this elongated area is another rotation axis with its wheels on the end, giving the set the configuration of a scooter, while when the elongated back base is folded onto the backpack, a cart is obtained, that in turn can be carried comfortably on the user's back, thanks to the placement of the backpack's straps.

In addition, it should be considered that when the back part of the base is in the folded position, some feet project downwards, which, together with the front wheels, provide a stable support to the set.

In order to complement the description that is going to be presented next and for the purpose of helping with a better understanding of its characteristics, a set of plans accompanies this description in which the figures, included as an example but not limited thereto, represent the most significant details of the invention.

### BRIEF DESCRIPTION OF THE FIGURES

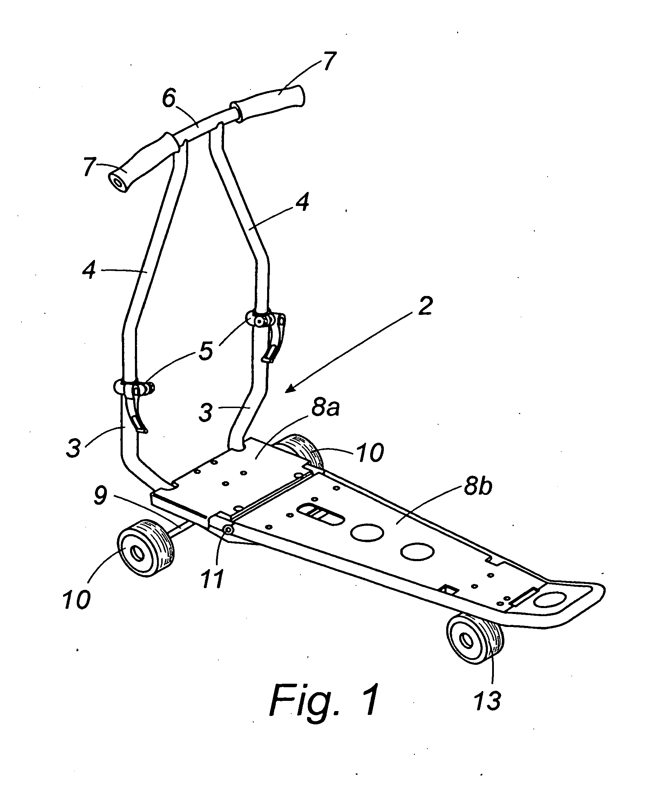

Figure 1. Shows a perspective view of the frame in the scooter position and without the backpack.

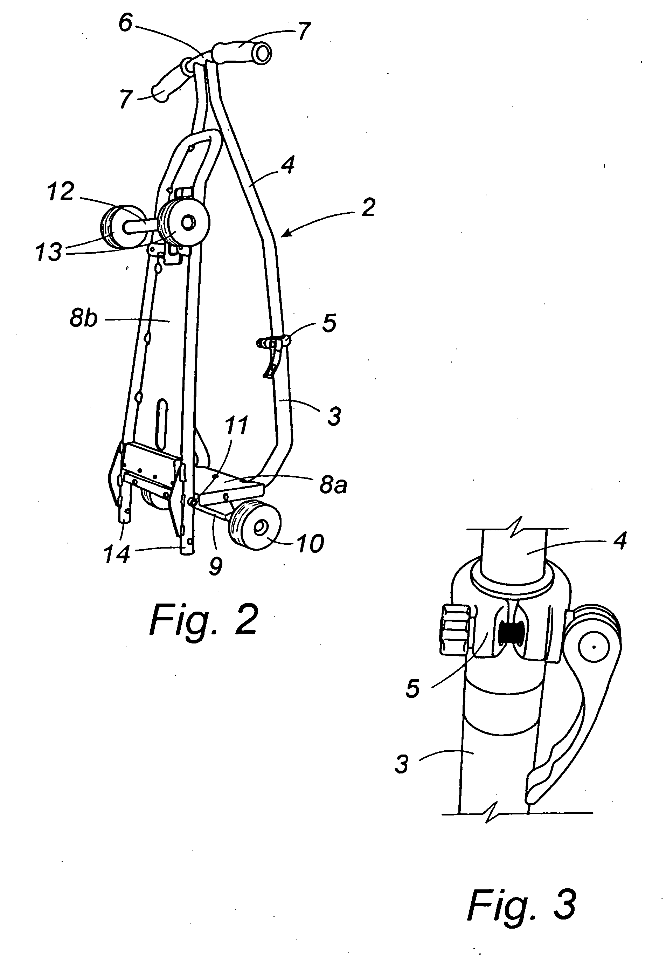

Figure 2. Shows a perspective view of this frame without the backpack and with the elongated back part of the base folded, being able to see the placement of the feet in this area of the base, that together with the front wheels allow the device to stand.
Figure 3. Shows a close-up in which the fastening device of the telescopic tubes can be seen.

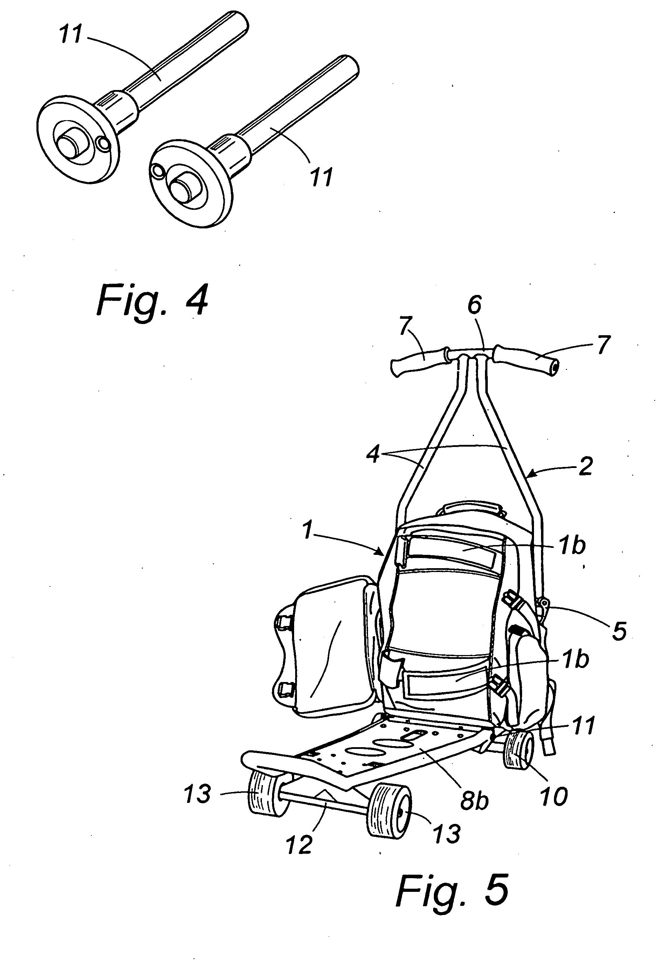

Figure 4. Shows the pins that impede the articulating of the back part of the base, for the use of the set as a scooter.
Figure 5. Shows a perspective view of the set as a scooter and with the backpack.

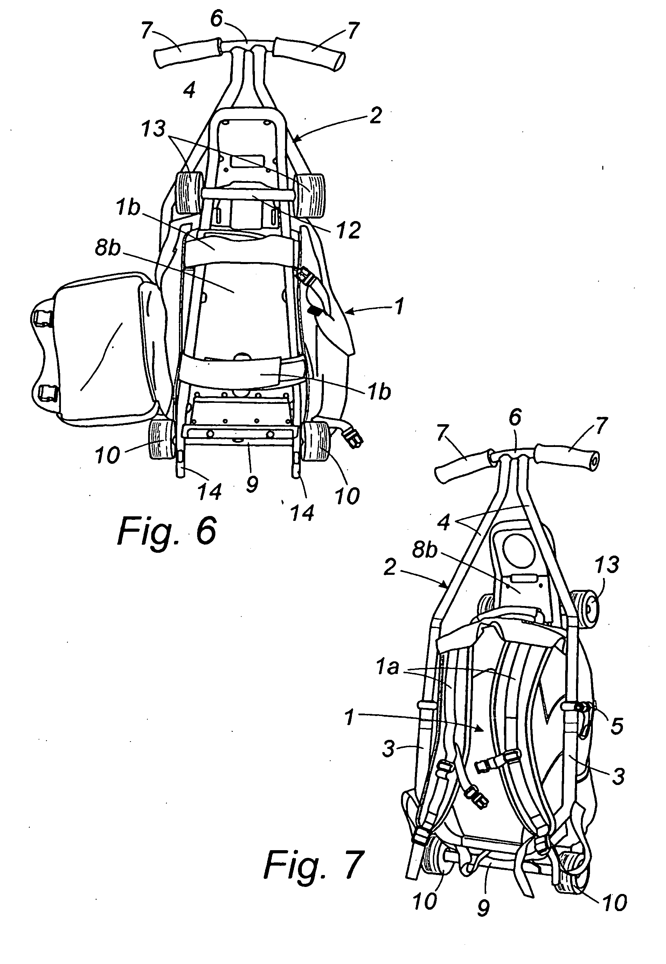

Figure 6. Shows a perspective view of the set with the back area of the base drawn up against the backpack, indicating the means of fastening the latter.
Figure 7. Shows a perspective view of the set totally folded and ready to be carried with the backpack straps on the user's back.

### DESCRIPTION OF AN EXAMPLE OF USAGE OF THE INVENTION

In light of the commented figures and according to the numeration adopted, an example of the practical usage of the invention can be observed therein, illustrated by but not limited to this example, which consists of a convertible backpack -1-, associated alternatively with a structure.-2- that can be converted into a cart or into a scooter.

This structure -2- is lightweight and is basically comprised of an elongated base -8-, from which in the front emerge a pair of telescopic tubes -3-, -4- from the end, supplied with their corresponding fasteners -5- in order to set their height, joined above by a crosspiece -6-, whose ends are finished by their respective handles -7-.

The front area -8a- of the bases presents a rotation axis -9- transversely and underneath, with wheels on the ends -10-, and its upper surface is used to hold the backpack, which is affixed with the shoulder straps -1a- directed towards the front, while the telescopic tubes are held by some strips.

The rest of the base -8b- is notably elongated and is articulated to the previous element, permitting it to fold on the backpack and subsequently fastened by bands -1b- of the backpack, which is thus perfectly immobilised, while on the other hand, with respect to this elongated area, there are some pins -11- that immobilise the folding, transversely, under the lower part of the opposite end of this elongated area, there is another rotation axis -12- with its wheels on the end -13-, giving the set the configuration of a scooter, while, when the elongated back base is folded on the backpack, you have a cart, that in turn can be transported comfortably on the user's back, thanks to the placement of the backpack straps.

In addition, it has been planned that when the back area of the base is in the folded position, some feet -14- emerge vertically downwards, that together with the front wheels provide a stable support for the set.

## Claims

1. CONVERTIBLE BACKPACK, comprising a backpack (1) associated with a structure (2) that provides for the conversion of the convertible backpack (1) in a cart or in a scooter, wherein the structure (2) is designed to be lightweight for this purpose and comprises an elongated base (8) presenting at the front area (8a) of the base (8), transversely and underneath, a rotation axis (9) with wheels on the end (10), with the upper surface apt to hold the backpack (1), which has shoulder straps (1a) directed towards the front part, with the rest of the base (8b) notably elongated and articulated to the front area (8a) **characterised in that** from the elongated base (8) in the front emerges a pair of telescopic tubes (3, 4) from the ends, supplied with corresponding fasteners (5) to set their height, being joined above by a crosspiece (6), whose ends are finished by the respective handles (7) , the lackpack having strips to hold the aforementioned telescopic tubes, the rest of the base (8b) being foldable on the backpack and subsequently fastened by means of bands (1b) available in the backpack, with the latter being perfectly immobilised.

2. CONVERTIBLE BACKPACK, according to claim 1, **characterised in that** the elongated back area (8b) of the base (8) is apt for receiving some pins (11) capable of immobilising the articulation with the front area (8a), remaining coplanar with it, transversely, under the lower part of the opposite end of this elongated back area (8b), there is another rotation axis (12) with wheels on the ends (13), giving the set the configuration of a scooter, while when the area of the elongated base (8b) is folded over the backpack, a cart is obtained, which in turn can be transported comfortably on the user's back, thanks to the placement of the backpack's straps and to the aforementioned means of fastening the structure.

3. CONVERTIBLE BACKPACK, according to claims 1 and 2, **characterised in that** the backpack is designed so that when the back area (8b) of the base (8) is in the folded position, some feet (14) directed vertically downwards project from this back area (8b), which, together with the front wheels (10), provide a stable support for the set placed in this manner.

## Patentansprüche

1. Umwandelbarer Rucksack, der einen Rucksack (1) umfasst, dem eine Struktur (2) zugeordnet ist, die die Umwandlung des umwandelbaren Rucksacks (1) in einen Karren oder in einen Roller ermöglicht, wobei die Struktur (2) so gestaltet ist, dass sie für diesen Zweck leichtgewichtig ist und eine langgestreckte Basis (8) umfasst, die am vorderen Bereich (8a) transversal und unterhalb der Basis (8) eine Rotationsachse (9) mit Rädern am Ende (10) aufweist, wobei die obere Fläche geeignet ist, den Rucksack (1) zu halten, der Schultergurte (1a) aufweist, die in Richtung zu dem vorderen Teil gerichtet sind, wobei der Rest der Basis (8b) besonders langgestreckt ist und an dem vorderen Bereich (8a) angelenkt ist,
**dadurch gekennzeichnet, dass** von der langgestreckten Basis (8) vorne ein Paar Teleskoprohre (3, 4) von den Enden ausgehen, die mit entsprechenden Fixiermitteln (5) versehen sind, um ihre Höhe einzustellen, und oben durch ein Querstück (6) verbunden sind, dessen Enden durch entsprechende Griffe (7) abgeschlossen sind, wobei der Rucksack Gurte zum Halten der obenerwähnten Teleskoprohre aufweist, und wobei der Rest der Basis (8b) auf den Rucksack faltbar ist und anschließend mittels Bändern (1 b), die am Rucksack vorhanden sind, befestigt werden kann, wobei der Rucksack gänzlich festgemacht wird.

2. Umwandelbarer Rucksack nach Anspruch 1, **dadurch gekennzeichnet, dass** der langgestreckte hintere Bereich (8b) der Basis (8) geeignet ist, einige Stifte (11) aufzunehmen, die fähig sind, die Gelenkverbindung mit dem vorderen Bereich (8a) zu fixieren, wobei er koplanar mit diesem bleibt, wobei sich transversal unter dem unteren Teil des gegenüberliegenden Endes dieses langgestreckten hinteren Bereichs (8b) eine weitere Rotationsachse (12) mit Rädern an den Enden (13) befindet, was der Anordnung die Konfiguration eines Rollers verleiht, während dann, wenn der Bereich der langgestreckten Basis (8b) über den Rucksack geklappt wird, ein Karren erhalten wird, der seinerseits auf dem Rücken eines Benutzers bequem transportiert werden kann, Dank der Anordnung der Rucksackgurte und der obenerwähnten Fixierungsmittel der Struktur.

3. Umwandelbarer Rucksack nach Anspruch 1 oder 2, **dadurch gekennzeichnet, dass** der Rucksack so gestaltet ist, dass dann, wenn der hintere Bereich (8b) der Basis (8) in der zusammengeklappten Position ist, einige vertikal nach unten gerichtete Füße (14) von diesem hinteren Bereich (8b) hervorstehen, die zusammen mit den Vorderrädern (10) eine stabile Unterstützung für die auf diese Weise abgestellte Anordnung bieten.

## Revendications

1. Sac à dos convertible comprenant le sac à dos (1) associé à une structure (2) qui assure la conversion du sac à dos convertible (1) en un chariot ou en un scooter, dans lequel la structure (2) est conçue pour être légère à cette fin et comprend une base allongée (8) présentant au niveau de la partie avant (8a) de la base (8), transversalement et au-dessous, un axe de rotation (9), doté de roues sur l'extrémité (10), la surface supérieure pouvant contenir le sac à dos (1), qui a des bretelles (1a) dirigées vers la partie avant, le reste de la base (8b) étant notamment allongé et articulé par rapport à la partie avant (8a) **caractérisé en ce qu'**une paire de tubes télescopiques (3, 4) débouche de la base allongée (8) dans la partie avant à partir des extrémités, dotés de dispositifs de fixation correspondants (5) pour en définir la hauteur, lesquels sont assemblés au-dessus par une pièce transversale (6), dont les extrémités se terminent chacune par une poignée (7), le sac à dos ayant des bandes servant à maintenir les tubes télescopiques susmentionnés, le reste de la base (8b) pouvant être plié sur le sac à dos et fixé ensuite au moyen de bandes (1 b) disponibles dans le sac à dos, ce dernier étant parfaitement immobilisé.

2. Sac à dos convertible selon la revendication 1, **caractérisé en ce que** la zone arrière allongée (8b) de la base (8) peut recevoir des tiges (11) pouvant immobiliser l'articulation avec la zone avant (8a), en restant coplanaire avec elle, dans le sens transversal, sous la partie inférieure de l'extrémité opposée de cette zone arrière allongée (8b), se trouve un autre axe de rotation (12) avec des roues sur les extrémités (13), donnant à l'ensemble l'aspect d'un scooter, tandis que lorsque la zone de la base allongée (8b) est repliée sur le sac à dos, on obtient un chariot, qui, à son tour, peut être transporté confortablement sur le dos de l'utilisateur, grâce au placement des sangles du sac à dos et au moyen de fixation susmentionnés de la structure.

3. Sac à dos convertible, selon les revendications 1 et 2, **caractérisé en ce que** le sac à dos est conçu de telle sorte que quand la zone arrière (8b) de la base (8) est dans la position repliée, certaines pattes (14) dirigées verticalement vers le bas se projettent de cette zone arrière (8b), ce qui avec les roues avant (10), fournit un support stable pour l'ensemble placé de cette manière.
